# EUROPÄISCHE PATENTSCHRIFT

(11) **EP 3 934 486 B1**
(45) Veröffentlichungstag und Bekanntmachung des Hinweises auf die Patenterteilung: **31.05.2023**
(21) Anmeldenummer: 20714466.8
(22) Anmeldetag: 19.03.2020
(51) Int. Cl.: A47C 31/12, A47C 7/14, A47C 9/00

(54) **VORRICHTUNG ZUR KÖRPERPOSITIONIERUNG**
BODY-POSITIONING APPARATUS
DISPOSITIF DE POSITIONNEMENT DU CORPS

(30) Priorität: 26.04.2019 AT 503862019
(43) Veröffentlichungstag der Anmeldung: 12.01.2022
(73) Patentinhaber: Zenzmaier, Cornelia, 8301 Lassnitzhöhe (AT)
(72) Erfinder: Zenzmaier, Cornelia, 8301 Lassnitzhöhe (AT)
(74) Vertreter: Schwarz & Partner Patentanwälte GmbH
(86) Internationale Anmeldenummer: PCT/AT2020/060114
(87) Internationale Veröffentlichungsnummer: WO 2020/215109

(56) Entgegenhaltungen:
- DE-U1-202016 102 473
- US-A1- 2015 051 526
- US-A1- 2017 086 588

## Beschreibung

Vorrichtung zur Körperpositionierung eines Benutzers, wobei die Vorrichtung in einen Sitz oder eine Liege integrierbar oder als Auflage verwendbar ist, umfassend ein Sitzelement, ein Becken- und Lendenwirbelsäulenmodul aufweisendes Rückenelement und eine Rechnereinheit, wobei das Rückenelement mit dem Sitzelement verbunden ist, wobei das Becken- und Lendenwirbelsäulenmodul zumindest ein Stellelement und zumindest einen Sensor umfasst, und das Sitzelement zumindest ein Stellelement und zumindest drei Sensoren umfasst, wobei die Sensoren mit der Rechnereinheit verbunden und dazu ausgebildet sind, Sitz- und Auflagedrücke des Benutzers im Sitzelement und im Becken- und Lendenwirbelsäulenmodul zu erfassen, wobei die Rechnereinheit mit den Stellelementen verbunden und dazu ausgebildet ist, die Sitz- und Auflagedrücke auszuwerten und die Stellelemente zu aktivieren.

Des Weiteren betrifft die Erfindung ein Verfahren zum Betrieb einer solchen Vorrichtung.

Benutzer sind sich ihrer eigenen individuellen Körperhaltung im Stehen, Sitzen und Liegen oft nicht bewusst und nehmen Positionen ein, die einseitige schmerzhafte Muskelkontrakturen verursachen und langfristig bei Fehlbelastung der Wirbelsäulen- und Beckenstruktur zu Abnutzungsprozessen, auch Bandscheibenvorfällen, führen können. Insbesondere langes Sitzen erfordert permanente Haltearbeit der Muskulatur oft in Fehlhaltung und ohne ausreichende Ausgleichsbewegungen, wodurch muskuläre Dysbalancen hervorgerufen und vielfältige körperliche Beschwerden begünstigt werden.

Eine zentrale Rolle, um Fehlhaltungen vorzubeugen und eine optimale Körperposition zu erreichen, nimmt das Becken des Benutzers ein. Vorrichtungen zur Beckenpositionierung sind weitgehend aus dem Bereich der Ergonomie bekannt. US20170086588A1 offenbart ein Luftkammersystem, umfassend zwei lateral beabstandete und in die Sitzfläche eines Sitzes integrierte Luftkammerelemente, welche bei ungleichmäßigem Sitzen das Becken des sitzenden Benutzers, durch das Ausbalancieren dessen Sitzbeinhöcker durch Zu- oder Abführen von Luft mittels eines Kompressors, positioniert. Ein Bereich der Luftkammerelemente ist beweglich ausgeführt, wodurch die Femur-Position des Benutzers einstellbar ist. In den Luftkammerelementen sind Kontaktdrucksensoren integriert, welche Sitzdrücke, die die Sitzbeinhöcker des Benutzers auf die Sitzfläche ausüben, erfassen. Ein Controller wertet die Sitzdrücke aus und steuert den Kompressor entsprechend der Auswertung an.

Bei der Vorrichtung zur Körperpositionierung nach dem Stand der Technik werden zum Erreichen einer verbesserten Körperhaltung beim Sitzen lediglich die Sitzdrücke der Sitzbeinhöcker des Benutzers erfasst und die Positionierung dieser sowie des Femurs vorgenommen. Diese Vorrichtung weist jedoch mehrere Nachteile auf.

Um eine verbesserte Körperposition im Sitzen zu erreichen, muss das Steißbein des Benutzers in aufrechter Sitzposition lastfrei sein. Dies ist durch das alleinige Erfassen der Sitzdrücke der Sitzbeinhöcker und deren Positionierung nicht umsetzbar, weshalb die Vorrichtung des Standes der Technik die Körperhaltung des Benutzers nur bedingt verbessert. Zudem erfolgt die Positionierung des Benutzers im Wesentlichen nur um dessen Sagittalachse, wodurch Krümmungsänderungen der Wirbelsäule, wie beispielsweise eine Kyphose, nicht vorgebeugt werden können. Zudem bietet die Positionierung des Femurs des Benutzers in im Wesentlichen aufrechter Sitzposition keine ausreichende Möglichkeit, das Becken derart zu positionieren, dass eine Verbesserung der Körperhaltung im Bereich der Wirbelsäule erreicht werden kann.

Ein weiterer Nachteil von bekannten Vorrichtungen, wie beispielsweise Rollstühlen, ergibt sich dadurch, dass eine anatomisch sinnvolle Abstützung im Bereich der Brustwirbelsäule in unzureichender Weise oder gar nicht berücksichtigt wird, wodurch die Ausbildung einer Kyphose begünstigt wird. Fällt dieser Nachteil mit dem Fehlen von haltungsfördernden Sitzelementen in einer Vorrichtung zusammen, ergibt sich insbesondere für ältere oder immobile Menschen eine gesundheitsschädliche Problematik. Die Dokumente DE202016102473U1 und US2015/051526A1 beschreiben ebenfalls Vorrichtungen, die für das Verständnis der Erfindung als nützlich angesehen werden.

Die Aufgabe der Erfindung besteht daher darin, eine Vorrichtung und ein Verfahren zur Körperpositionierung eines Benutzers bereitzustellen, die die Nachteile des Standes der Technik vermeiden.

Diese Aufgabe wird durch Bereitstellen einer Vorrichtung zur Körperpositionierung eines Benutzers mit den Merkmalen von Anspruch 1 sowie eines Verfahrens zur Körperpositionierung mit den Merkmalen von Anspruch 9 gelöst.

Die vorliegende Erfindung stellt eine Vorrichtung zur Körperpositionierung eines Benutzers bereit, wobei ein erster und ein zweiter Sensor und ein dritter Sensor dazu ausgebildet sind den Sitzdruck des ersten und zweiten Sitzbeinhöckers und den Sitzdruck des Steißbeins bei im Wesentlichen aufrechter Sitzposition des Benutzers zu erfassen, wobei der erste und der zweite Sitzbeinhöcker ein Sitzbeinhöckerniveau definieren, wobei das Stellelement des Sitzelements dazu ausgebildet ist, bei Sitz- und/oder Auflagedruckunterschieden das Sitzbeinhöckerniveau horizontal um die Sagittalachse des Benutzers auszugleichen und worauf das Stellelement des Becken- und Lendenwirbelsäulenmoduls dazu ausgebildet ist, das Becken des Benutzers um dessen Horizontalachse zu kippen, bis der Sitz- und/oder Auflagedruck des Steißbeins im Wesentlichen den Wert Null aufweist. Zudem treten im Bereich des Kreuzbeins und des Steißbeins des Benutzers bei dessen Überführung von einer im Wesentlichen aufrechten Sitzposition in eine um die Horizontalachse des Benutzers geneigte Position, Sitz- und/oder Auflagedrücke in Abhängigkeit von der Neigung dieser Position auf, wobei in liegender Körperposition im Bereich des Kreuzbeins im Wesentlichen maximale Sitz- und/oder Auflagedrücke auftreten. Durch das Vorhandensein eines zusätzlichen, dritten Sensors im Sitzelement und eines Sensors im Becken- und Lendenwirbelsäulenmodul im Bereich des Kreuzbeins des Benutzers ist es möglich, neben den Sitzdrücken der Sitzbeinhöcker des Benutzers auch den Sitz- und/oder Auflagedruck dessen Steiß- und Kreuzbeins zu erfassen. Hierdurch ist der Vorteil erhalten, dass Kräfte, welche sich longitudinal entlang der Wirbelsäule des Benutzers aufgrund einer Fehlhaltung oder während des Abrollvorgangs dessen Beckens durch Stellbewegungen der Stellelemente zum Zweck der Körperpositionierung oder während einer Änderung der Neigung des Rückenelements, von der Wirbelsäule des Benutzers über dessen Kreuzbein auf das Steißbein und die Sitzbeinhöcker übertragen, an der Vorrichtung erfasst werden können. Auf dem Sitz-und/oder Auflagedruck des Steißbeins basierend können die Stellelemente des Becken- und Lendenwirbelsäulenmoduls das Becken des Benutzers derart kippen, bis das Steißbein im Wesentlichen lastfrei wird. Das löst das Problem von Vorrichtungen zur Körperpositionierung gemäß dem Stand der Technik, bei welchen die Sensoren nur Sitzdrücke der Sitzbeinhöcker des Benutzers erfassen und die Sitzbeinhöcker ausbalancieren, jedoch aber keine Kippung des Beckens berücksichtigen, die ein wesentlicher Bestandteil der Körperpositionierung ist, und dadurch das Steißbein in Fehlhaltung großen Sitzdrücken ausgesetzt sein kann. Durch das Vorhandensein eines Sensors zur Erfassung des Steißbeindrucks und eines Sensors zur Erfassung des Drucks im Bereich des Kreuzbeins ist es möglich, den Abrollvorgang des Beckens, während der Überführung des Benutzers in Richtung in einer Liegeposition, durch Sitz- und/oder Auflagedruckunterschiede in Abhängigkeit der Neigung der Position bei veränderter Sitz- beziehungsweise Liegeposition zu erfassen.

Ein weiterer Vorteil ist dadurch erhalten, dass die vorliegende Erfindung in einen bereits bestehenden Sitz oder eine Liege integriert oder als Sitzauflage auf einen Stuhl oder Bett verwendet werden kann. Hierdurch ergeben sich eine Vielzahl von Anwendungsmöglichkeiten, wobei die Vorrichtung nicht auf folgende Beispiele beschränkt ist. Die Vorrichtung könnte zum Beispiel in folgende Einrichtungen integriert werden: in Bürosessel, Rollstühle, Fahrzeugsitze, Kinderrückhaltesysteme, Trainingsgeräte, Matratzen, oder im Rehabilitations- und Therapiebereich verwendet werden, insbesondere in Stehbretten, Stehbetten und/oder Operationsbetten.

Ein weiterer Vorteil ergibt sich dadurch, dass die Körperpositionierung mittels den Stellelementen des Sitz- und Rückenelements kraftflüssig und selbstregulativ durch das Eigengewicht des Benutzers und/oder durch dessen Eigenbewegungen erfolgen kann. Zudem kann die Rechnereinheit, die die Stellelemente aktiviert, durch den Benutzer selbst und/oder bei älteren immobilen Menschen durch Dritte, wie beispielsweise eine Pflegekraft, angesteuert werden.

Gemäß einer bevorzugten Ausführungsform der Vorrichtung zur Körperpositionierung eines Benutzers weist das Rückenelement vorzugsweise ein dreiteiliges Brustwirbelsäulenmodul und ein Halswirbelsäulen- und Kopfmodul auf, wobei das Brustwirbelsäulenmodul mit dem darunter liegenden Becken- und Lendenwirbelsäulenmodul und das Halswirbelsäulen- und Kopfmodul mit dem darunter liegenden Brustwirbelsäulenmodul vorzugsweise mechanisch durch mit fluidgefüllten Kanäle oder elektrisch, durch eine kabelgebundene oder kabellose, mittels Bluetooth oder WLAN hergestellte Verbindung und/oder einer Kombination von diesen verbunden sein kann. Durch das dreiteilige Brustwirbelsäulenmodul und das vorzugsweise vierteilig ausgeführte Becken- und Lendenwirbelsäulenmodul ist der Vorteil erhalten, dass auch Benutzer mit schweren Beeinträchtigungen, wie beispielsweise einer pathologischen Rotationsformierung der Wirbelsäule oder Skoliose segmental gestützt, positioniert und mobilisiert werden können. Ein weiterer Vorteil ist darin enthalten, dass die Vorrichtung vorzugsweise unterstützende Stabilisierungs- und Mobilisierungsmaßnahmen ohne Fixierung bereitstellt, wobei eine verbesserte Sitz- und Liegeposition im Bereich des Beckens und des Brustwirbelsäulenbereichs erzielt werden kann. Die Halswirbelsäule des Benutzers wird hierbei indirekt über den gestützten Brustwirbelsäulen- bzw. Schulterbereich mitbeeinflusst, wobei durch das individuell anpassbare Halswirbelsäulen- und Kopfmodul des Benutzers zusätzlich stabilisiert und mobilisiert werden kann.

Gemäß einer bevorzugten Ausführungsform der Vorrichtung zur Körperpositionierung eines Benutzers weist das Rückenelement weitere Stellelemente, beispielsweise zur Positionierung und Abstützung der Wirbelsäule im Übergangsbereich einer Lordose in eine Kyphose, oder zur seitlichen Abstützung immobiler Menschen mit Rumpfinstabilitäten auf, die dazu ausgebildet sind durch alternierende und/oder synchrone Stellbewegungen, insbesondere im Bereich der Wirbelsäule, den Benutzer sagittal und um dessen Longitudinalachse zu positionieren, wobei die Rechnereinheit dazu ausgebildet ist, die Stellbewegungen im Becken- und Lendenwirbelsäulenmodul, im Brustwirbelsäulenmodul und im Halswirbelsäulen- und Kopfmodul aufeinanderfolgend durchzuführen, wobei sich in den bereits positionierten Stellelementen des Sitz- und/oder Rückenelements im Wesentlichen keine Sitz- und/oder Auflagedruckunterschiede beziehungsweise Körperpositionsänderungen ergeben. Hierdurch ist der Vorteil erhalten, dass durch die Stellbewegungen in Form von alternierenden und/oder synchronen Auf- und Abwärtsbewegungen, Druckpunkte und/oder Druckbereiche im Becken- und Lendenwirbelsäulen-, Brustwirbelsäulen-, Halswirbelsäulenbereich und Kopfbereich des Benutzers aufgebracht werden, wodurch die propriozeptive Muskelarbeit angeregt wird, wobei die alternierende Bewegung einseitig Druck auf den Körper ausübt und auf der anderen Seite im gleichen Ausmaß zurückweicht, sodass der Körper des Benutzers mit einer Ausgleichsbewegung darauf reagieren und den Rückenbereich positionieren und mobilisieren kann. Insbesondere im gelenkigen Bereich zwischen Kreuzbein und Becken können sich alternierende Stellbewegungen positiv auswirken. Zudem sparen die Stellelemente bei deren Aktivierung die Dornfortsätze des Benutzers aus. Ein weiterer Vorteil ist dadurch erhalten, dass die Stellbewegungen den Körper des Benutzers segmental durch die Detektion von segmentalen Sitz- und Auflagedruckunterschieden in mit dem jeweiligen Stellelement funktional zusammenhängenden Stellelement stabilisieren, und durch die Aussparung der Dornfortsätze verhindert werden kann, dass die druckempfindlichen Dornfortsätze bei der Körperpositionierung Auflagedrücken ausgesetzt werden, welche zu Schmerzen oder pathologischen Veränderungen des umliegenden Körpergewebes führen. Zusätzlich ist es möglich den Brustwirbelsäulenbereich mittig zur Aufrichtung der Wirbelsäule zu stützten, wobei die Schulterblätter weicher beziehungsweise tiefer gelagert und über Stellelemente im Bereich der Schulterblätter Rotationsfehler des Benutzers um dessen Longitudinalachse ausgeglichen werden können. Zusätzlich erhöht sich durch die Tief- beziehungsweise Weichlagerung der Schulterblätter die Bewegungsfreiheit der oberen Extremitäten. Da die Kippung des Beckens, im Übergang zur Lastübernahme beziehungsweise -freiheit des Steißbeins und des Kreuzbeins und die Stellbewegung des Brustwirbelsäulenmoduls in sagittale positive und negative Richtung in jenem Zustand beendet wird, bei der die Druckverteilung beziehungsweise die Positionierung des Beckens erreicht beziehungsweise im Wesentlichen unverändert bleibt, ist ein weiterer Vorteil erhalten, dass eine neutrale Position des Beckens zu jedem Zeitpunkt in einer geneigten oder liegenden Körperposition erhalten oder definiert werden kann. Durch Vorhandensein von Sensoren im Rückenelement, insbesondere im Becken- und Lendenwirbelsäulenmodul, ist es möglich, Beckenrotationsfehlstellungen zu detektieren, die durch Stellelemente in selbigem Modul durch eine Rotation um die Longitudinalachse des Benutzers ausgeglichen werden können, bis am Beckenkamm des Benutzers eine gleichmäßige Druckverteilung erreicht wird. Ein weiterer Vorteil ist dadurch erhalten, dass die symmetrische Positionierung des Beckens in allen drei Körperebenen durchführbar ist, wodurch die unteren Extremitäten funktionell von der knöchernen Beckenstruktur des Benutzers entkoppelt sind. Somit können Fußverkürzungen und ein Beckenschiefstand, der im aufrechten Stand und durch das Gehen Fehlhaltungen der Wirbelsäule hervorruft, ausgeglichen werden, sofern keine fixierten körperlichen Veränderungen gegeben sind. Bei fixierten körperlichen Veränderungen können sich die Stellbewegungen jedoch positiv auswirken. Durch die individuelle Positionierung beziehungsweise Abstützung des Beckens und der Wirbelsäulenstruktur sowie der segmentalen Mobilisierung und Stabilisierung dieser können Fehlanwendung aufgrund von Unkenntnis des Benutzers über dessen eigene Haltung ausgeschlossen werden kann. Ein weiterer Vorteil der vorliegenden Erfindung ist dadurch erhalten, dass bei Benutzern, die eine ausgeprägte Kyphose beziehungsweise eine starke Abweichung der "normalen" sagittalen Ausrichtung der Wirbelsäule aufweisen, vorwiegend der Bereich der Lendenwirbelsäule und wenigstens der Übergangsbereich zur Brustwirbelsäule in Bezug zum Becken gestützt werden und somit eine Verschlechterung des körperlichen Zustands verzögert oder sogar verhindert werden kann.

Gemäß einer bevorzugten Ausführungsform der Vorrichtung zur Körperpositionierung eines Benutzers weist die Vorrichtung ein Beinelement auf, wobei das Beinelement mit dem Sitzelement verbunden ist und weitere Stellelemente und Sensoren umfasst. Hierdurch ist der Vorteil erhalten, dass durch Aktivieren der Stellelemente der Benutzer, bei dessen Überführung von einer Sitzposition in eine Liegeposition, die neutrale Positionierung des Beckens beibehält, wobei diese in einer geneigten Lage oder in einer liegenden Körperposition unter Einbeziehung der muskulären Einflüsse der unteren Extremitäten, insbesondere jenen des mit dem Becken direkt verbundenen Oberschenkels, auf das Becken in der geneigten Lage dadurch gegeben ist, dass die Fersen des Benutzers gemäß dessen anatomischer Knochenstruktur über dem Niveau dessen Steiß- beziehungsweise Kreuzbeins oder Sitzbeinhöckerniveaus aufliegen. Ein Weiterer Vorteil der Stellelemente des Beinelements ist dadurch erhalten, dass deren Aktivierung in Kombination mit der neutralen Beckenposition des Benutzers Venenstau verhindern und eine Art "Venenpumpe" erzeugen können. Das Beinelement kann mit dem Sitzelement vorzugsweise mechanisch, durch fluidgefüllte Kanäle oder elektrisch, durch eine kabelgebundene oder kabellose, mittels beispielsweise Bluetooth oder WLAN hergestellte Verbindung, und/oder einer Kombination von diesen verbunden sein.

Gemäß einer bevorzugten Ausführungsform der Vorrichtung zur Körperpositionierung eines Benutzers umfassen die Stellelemente Aktuatoren ausgewählt aus der Gruppe von mechanischen, elektrischen, pneumatischen oder hydraulischen Aktuatoren, also beispielsweise einen elektrischen Stellmotor, eine Luftpumpe oder eine Hydraulikpumpe. Hierdurch ist der Vorteil gegeben, dass die Körperpositionierung des Benutzers durch eine Vielzahl von Stellelementen durchgeführt werden kann. Beispielsweise kann der Benutzer bei der Verwendung eines mit fluidgefüllten Kammersystems kraftflüssig, durch Umverteilen des Fluids durch dessen Eigengewicht, oder durch die Verwendung einer Pumpvorrichtung positioniert werden. Des Weiteren können elektrische Linearantriebe den Benutzer, durch entsprechendes Aktivieren dieser durch eine Rechnereinheit positionieren. Hierdurch ist der Vorteil erhalten, dass keine, durch Ventile definierte, Regelkreise wie beispielsweise in einem kraftflussgesteuerten Kammersystem notwendig sind. Für die Körperpositionierung können auch hydraulische Linearantriebe verwendet werden. Hierdurch wäre der Vorteil erhalten, dass große Kräfte zur Körperpositionierung aufgebracht werden können, wodurch immobile Benutzer, insbesondere bettlägerige und querschnittsgelähmte Personen, exakt positioniert und mobilisiert werden können. Der Begriff der Stellelemente ist aber nicht auf oben genannte Beispiele beschränkt.

Gemäß einer bevorzugten Ausführungsform der Vorrichtung zur Körperpositionierung eines Benutzers sind die Sensoren als mechanische, elektrische, pneumatische oder hydraulische Sensoren ausgebildet. Hierdurch ist der Vorteil gegeben, dass Sitz- und/oder Auflagedrücke des Benutzers durch eine Vielzahl von Sensoren erfasst werden können. Beispielsweise können bei dem Einsatz eines mit fluidgefüllten Kammersystems Drucksensoren eingesetzt werden, welche Sitz- und/oder Auflagedrücke durch Druckunterschiede in den Kammern erfassen. Des Weiteren können auch mechanische Sensoren wie Dehnungsmessstreifen, oder aber auch Beschleunigungssensoren zur Erfassung der Sitz- und/oder Auflagedrücke verwendet werden. Der Begriff der Sensoren ist aber nicht auf oben genannte Beispiele beschränkt.

Das erfindungsgemäße Verfahren zum Betrieb einer Vorrichtung zur Körperpositionierung eines Benutzers umfasst das Erfassen des Sitz- und/oder Auflagedrucks der Sitzbeinhöcker des Benutzers durch den ersten und zweiten Sensor, das Auswerten der Sitz- und/oder Auflagedrücke und, bei Sitz- und/oder Auflagedruckunterschieden, das Aktivieren des Stellelements des Sitzelements durch die Rechnereinheit, das horizontale Ausgleichen des Sitzbeinhöckerniveaus des Benutzers um dessen Sagittalachse, das Erfassen des Sitzdruckes des Steißbeins des Benutzers durch den dritten Sensor des Sitzelements, das Auswerten des Sitz- und/oder Auflagedrucks des Steißbeins des Benutzers durch die Rechnereinheit, das Aktivieren des Stellelements des Becken- und Lendenwirbelsäulenmoduls durch die Rechnereinheit zur Kippung des Beckens des Benutzers um dessen Horizontalachse in eine positive und/oder negative sagittale Richtung, und das Beenden der Stellbewegung der Stellelemente durch die Rechnereinheit, sobald der Sitz- und/oder Auflagedruck des Steißbeins während des Kippens im Wesentlichen den Wert Null aufweist. Durch das Erfassen des Bereichs des Steiß- und Kreuzbeins des Benutzers können insbesondere Kräfte, welche sich longitudinal entlang der Wirbelsäule des Benutzers aufgrund seiner Fehlhaltung oder während des Abrollvorgangs dessen Beckens durch Stellbewegungen der Stellelemente zum Zweck der Körperpositionierung an der Vorrichtung erfasst werden. Zusätzlich können auch Kräfte erfasst werden, welche sich aufgrund einer Änderung der Neigung des Rückenelements, von der Wirbelsäule des Benutzers über dessen Kreuzbein auf das Steißbein und die Sitzbeinhöcker übertragen an der Vorrichtung erfasst werden. Durch Vorhandensein von Sensoren im Becken- und Lendenwirbelsäulenmodul des Rückenelements ist ein weiterer Vorteil dadurch erhalten, dass Beckenrotationsfehlstellungen erfasst werden können, die durch Stellelemente in selbigem Modul durch eine Rotation um die Longitudinalachse des Benutzers ausgeglichen werden können, bis im Bereich des Beckenkamms des Benutzers eine gleichmäßige Sitz- und/oder Auflagedruckverteilung erreicht wird. Ein Weiterer Vorteil ist dadurch erhalten, dass es durch das Vorhandensein eines Sensors zur Erfassung des Sitz-und/oder Auflagedrucks des Steißbeins und eines Sensors zur Erfassung des Sitz- und oder Auflagedrucks des Kreuzbeins möglich ist, den Abrollvorgang des Beckens, während der Überführung des Benutzers, durch Sitz- und/oder Auflagedruckunterschiede in Abhängigkeit der Neigung der Körperposition bei veränderter Sitz- beziehungsweise Liegeposition zu erfassen. Hierdurch kann eine neutrale Positionierung des Beckens auch in einer liegenden Körperposition erhalten bleiben.

Gemäß einer bevorzugten Ausführungsform umfasst das Verfahren zur Körperpositionierung eines Benutzers nach dem Sitzbeinhöckerniveauausgleich und dem Kippvorgang des Beckens des Benutzers das Positionieren und das sagittale Abstützen des Benutzers im Brustwirbelsäulenbereich durch das Aktivieren der Stellelemente des Brustwirbelsäulenmoduls durch die Rechnereinheit, wobei die Stellbewegungen den Bereich der Dornfortsätze aussparen, das Erfassen von Sitz- und Auflagedruckunterschieden durch die Sensoren des Sitz- und Rückenelements, das Auswerten der Sitz- und Auflagedrücke durch die Rechnereinheit, das Beenden der Stellbewegung des Stellelements des Brustwirbelsäulenmoduls durch die Rechnereinheit sobald ein wesentlicher Sitz- und/oder Auflagedruckunterschied in den Stellelementen des Sitzelements und/oder des Becken- und Lendenwirbelsäulenmoduls erfasst wird, das anschließende Positionieren und das sagittale Abstützen des Benutzers in dessen Halswirbelsäulen- und Kopfbereich durch das Aktivieren der Stellelemente des Halswirbelsäulen- und Kopfmoduls durch die Rechnereinheit, das Beenden der Stellbewegung der Stellelemente durch die Rechnereinheit sobald ein Sitz-und/oder Auflagedruckunterschied in den Stellelementen des Brustwirbelsäulenmoduls erfasst wird. Hierdurch ist der Vorteil erhalten, dass durch alternierende Druckpunkte und/oder Druckbereiche im Becken- und Lendenwirbelsäulen-, Brustwirbelsäulen-, Halswirbelsäulenbereich und Kopfbereich die propriozeptive Muskelarbeit durch die Stellbewegung angeregt werden kann, wobei die Bewegung einseitig Druck auf den Körper ausübt und auf der anderen Seite im gleichen Ausmaß zurückweicht, sodass der Körper mit einer Ausgleichsbewegung darauf reagieren und dadurch der Rückenbereich des Benutzers segmental mobilisiert werden kann. Ein weiterer wesentlicher Vorteil ist hierdurch erhalten, dass die Positionierung des Beckens des Benutzers in allen drei Körperebenen erfolgt, wodurch eine neutrale Sitzposition eingenommen werden kann. Ein weiterer Vorteil ist dadurch erhalten, dass keine pathologischen Druckstellen im Bereich des Steißbeins und des Kreuzbeins auftreten, welche durch die knöchrige Struktur zu starken Schmerzen und Gewebeschäden, insbesondere bei immobilen Benutzern, führen können.

Gemäß einer Ausführungsform erfolgt das Verfahren zur Körperpositionierung des Benutzers in einer geneigten Lage des Rückenelements. Hierdurch ist der Vorteil erhalten, dass die Körperpositionierung auch in bereits bestehenden Vorrichtungen wie beispielsweise Fahrzeugsitzen oder Flugzeugsitzen stattfinden kann, da diese Vorrichtungen für gewöhnlich mit einem geneigten Rückenelement ausgeführt sind. Zusätzlich sind Benutzer mit schweren körperlichen Beeinträchtigungen wie Skoliose in einer geneigten Lage leichter positionier-, stabilisier- und mobilisierbar.

Gemäß einer Ausführungsform des Verfahrens werden die Stellelemente an einer Stelle des Beinelements bei einer geneigten Lage des Rückenelements und einer geneigten Lage des Sitzelements durch die Rechnereinheit aktiviert, bis die Ferse des Benutzers mindestens auf dem Sitzbeinhöckerniveau liegt. Hierdurch ist der Vorteil erhalten, dass eine, durch die Kippung des Beckens des Benutzers in dessen positive sagittale Richtung entstehende Hyperlordose und an der Wirbelsäule auftretende Kräfte verhindert werden können. Ein weiterer Vorteil ist dadurch behalten, dass durch die Aktivierung der Stellelemente des Beinelements eine neutrale Positionierung des Beckens des Benutzers in einer Liegeposition beibehalten werden kann.

Gemäß einer Ausführungsform umfasst das Verfahren zur Körperpositionierung eines Benutzers nach der Positionierung des Benutzers das Nachpositionieren des Benutzers in zyklischen Zeitabständen und/oder bei einem segmentalen Druckunterschied von vordefinierten Sitz- und Auflagedruckbereichen, das Aktivieren von Stellelementen der Vorrichtung in einer Horizontalebene des Rückenelements und/oder des Sitzelements und/oder des Beinelements in Form von synchronen und/oder alternierenden Stellbewegungen segmental aufwärts und/oder abwärts aufeinanderfolgend oder in beliebiger Reihenfolge entlang der Longitudinalachse, wobei die synchronen Stellbewegungen sowohl in positive als auch negative sagittale Richtung erfolgen und die alternierenden Stellbewegungen in Form einer Rotation um die Longitudinalachse erfolgen, wobei die Stellbewegung einseitig in positive sagittale Richtung und auf der anderen Seite in dem gleichen Ausmaß in negative sagittale Richtung erfolgt, das Aktivieren des Stellelements des Sitzelements in Form von synchronen oder alternierenden Stellbewegungen, und das Aktivieren von Stellelementen des Beinelements in Form von synchronen und/oder alternierenden Stellbewegungen. Hierdurch ist der Vorteil erhalten, dass die Körperpositionierung automatisch in einem Zeitintervall, oder dynamisch, insbesondere selbstregulativ durch eine falsche, die knöchernen Strukturen des Körpers zu stark belastende Fehlstellung des Benutzers erfolgen kann. Des Weiteren ist nach der segmentalen Positionierung des Rückenbereichs des Benutzers durch das Aktivieren von Stellelementen in Form von impulsartigen entlang des Beinelements aufeinanderfolgenden Stellbewegungen der Vorteil erhalten, dass die Tiefenmuskulatur des Benutzers im unmittelbaren Bereich dessen Wirbelsäule angeregt wird und in seiner zu diesem Zeitpunkt richtigen individuellen Haltung gestärkt wird. Die Vorrichtung ist ausgehend von der Wirbelsäulen- und Beckenabstützung in der Lage, den Muskeltonus verändernde Druckpunkte und -bereiche zu aktivieren, um eine Kräftigung der Tiefenmuskulatur zu erzielen, die Körperhaltung des Benutzers zu schulen und eine schrittweise Verbesserung des individuellen Zustands in Richtung einer verbesserten, insbesondere lotrechten, Ausrichtung der Wirbelsäule in Bezug auf das Becken zu bewirken. Die neutrale Position der Wirbelsäule und des Beckens wird in jeder geneigten Lage der Vorrichtung beibehalten.

Die Erfindung wird nun unter der Bezugnahme auf die Zeichnungen anhand von Ausführungsbeispielen näher erläutert.

Figur 1 zeigt eine schematische Darstellung der Vorrichtung gemäß einer bevorzugten Ausführungsvariante der Erfindung.

Figur 2 zeigt eine Seitenansicht der Vorrichtung gemäß Figur 1.

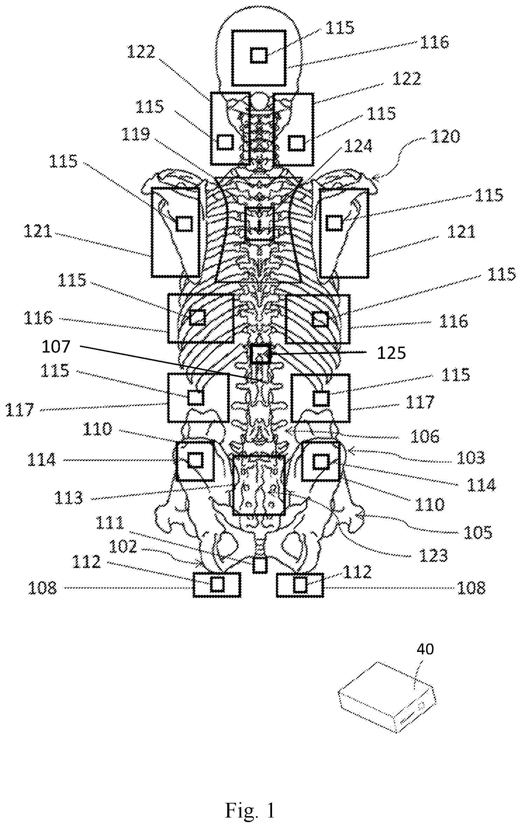

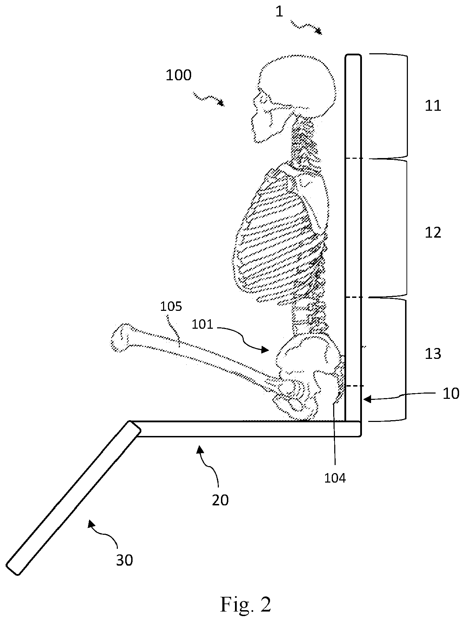

Im Folgenden wird die Erfindung anhand der Figuren detailliert beschrieben. Figur 1 und Figur 2 sind schematische Darstellungen einer Vorrichtung 1 zur Körperpositionierung eines Benutzers 100 im Sitzen gemäß der vorliegenden Erfindung. Die Vorrichtung 1 ist in einen Sitz oder eine Liege integrierbar oder als Auflage auf einem Sessel oder auf einer Liege oder einem Bett verwendbar und umfasst ein Sitzelement 20, ein Becken- und Lendenwirbelsäulenmodul 13 aufweisendes Rückenelement 10 und eine Rechnereinheit 40.

Das Rückenelement 10 weist ferner ein Brustwirbelsäulenmodul 12 und ein Halswirbelsäulen- und Kopfmodul 11 auf, wobei das Brustwirbelsäulenmodul 12 mit dem Lendenwirbelsäulenmodul 13, das Halswirbelsäulen- und Kopfmodul 11 mit dem Brustwirbelsäulenmodul 12 und das Rückenelement 10 mit dem Sitzelement 20 vorzugsweise mechanisch, durch mit fluidgefüllten Kanälen, verbunden ist. Das Becken- und Lendenwirbelsäulenmodul 13 umfasst zumindest vier Stellelemente 117 und 110 und zumindest drei Sensoren 114 und 113 und das Sitzelement 20 zumindest zwei Stellelemente 108 und zumindest drei Drucksensoren 111 und 112, wobei die Stellelemente 108 als selbst aufblasende, verformbare und mit fluidgefüllten Kammern ausgebildet und miteinander durch Ventile aufweisende Kanäle verbunden sind. Die Drucksensoren 111 und 112, 114 und 113 sind dazu ausgebildet Sitz- und Auflagedrücke des Benutzers 100 zu erfassen, wobei die Rechnereinheit 40 mit den Kammern, insbesondere mit den Ventilen, und mit den Drucksensoren 111 und 112, 114 und 113 verbunden ist, wobei die Verbindungen in den Figuren zwecks Übersicht nicht dargestellt sind. Die Drucksensoren 112 sind durch ihre Positionierung im Sitzelement 20 dazu ausgebildet den Sitzdruck des ersten und zweiten Sitzbeinhöckers 102 zu erfassen, wobei der erste und zweite Sitzbeinhöcker 102 ein Sitzbeinhöckerniveau definieren. Der Drucksensor 111 ist durch seine Positionierung im Sitzelement 20 dazu ausgebildet den Sitzdruck des Steißbeins 104 des Benutzers 100 zu erfassen. Die Kammern des Sitzelements 20 sind dazu ausgebildet, bei Sitzdruckunterschieden das Sitzbeinhöckerniveau horizontal um die Sagittalachse des Benutzers 100 auszugleichen, wobei das Fluid aus der mit dem höheren Innendruck versehenen Kammer des Sitzelements 20 abgelassen und kraftflüssig, durch das Eigengewicht des Benutzers 100, mittels der die Kammern verbindenden Kanälen in die Kammern des Becken- und Lendenwirbelsäulenmoduls 13 gepumpt wird. Die Drucksensoren 114 und 113 im Becken- und Lendenwirbelsäulenmodul 13 sind durch ihre Positionierung im Rückenelement 10 dazu ausgebildet den Druck des Beckenkamms 103 und den Druck des Kreuzbeins 123 zu erfassen. Die Kammern des Becken- und Lendenwirbelsäulenmoduls 13 sind dazu ausgebildet das Becken 101 des Benutzers 100 durch das umverteilte Fluid um dessen Horizontalachse und dessen Longitudinalachse, vorzugsweise beidseitig wechselweise beziehungsweise alternierend zu kippen, bis der Sitzdruck des Steißbeins 104 vorzugsweise in aufrechter Sitzposition, im Grenzbereich bei Belastung und Lastfreiheit des Steißbeins 104, im Wesentlichen den Wert Null aufweist und der Auflagedruckunterschied des Beckenkamms 103 des Benutzers in den Kammern 110 im Bereich des Becken- und Lendenwirbelsäulenmodul im Wesentlichen Null aufweist, wodurch der Benutzer 100 eine neutrale Positionierung des Beckens im Sitzen erreicht.

Des Weiteren weist das Rückenelement 10 der Vorrichtung 1 zur Körperpositionierung eines Benutzers 100 weitere Kammern 116, 121 und 119 und im Brustwirbelsäulenbereich und einen Sensor 125 im Übergangsbereich zwischen Lordose und Kyphose auf. Die Kammern sind dazu ausgebildet nach dem Erreichen einer neutralen Positionierung des Beckens, durch Stellbewegungen, insbesondere durch deren alternierendes und/oder synchrones Aufpumpen, insbesondere im Bereich der Wirbelsäule 106, den Benutzer 100 sagittal und um dessen Longitudinalachse zu positionieren, wobei die Kammern 116, 121 und 119 die Dornfortsätze 107 des Benutzers 100 beim Aufpumpvorgang aussparen. Der Sensor 125 des Übergangbereiches dient zur Erfassung einer Kontrolllage des Benutzers 100. Stellbewegungen erfolgen kraftflüssig, durch das Eigengewicht des Benutzers 100, und werden aufeinanderfolgend im Becken- und Lendenwirbelsäulenmodul 13, im Brustwirbelsäulenmodul 12 und im Halswirbelsäulen- und Kopfmodul 11 durchgeführt. Des Weiteren weist die Vorrichtung 1 ein Beinelement 30 auf, wobei das Beinelement 30 mit dem Sitzelement 20 vorzugsweise mechanisch durch mit fluidgefüllten Kanälen verbunden ist und weitere Kammern und Drucksensoren umfasst, die in den Figuren nicht dargestellt sind. Die Kammern werden zur Abstützung der unteren Extremitäten eingesetzt, wobei die neutrale Positionierung des Beckens und der Wirbelsäule und die Verteilung des in den Kammern bestehenden Drucks in geneigter Lage des Rückenelements erhalten bleibt. Die Umverteilung des Fluides kann neben dem Eigengewicht des Benutzers 100 auch durch dessen Eigenbewegungen erfolgen. Stellbewegungen im Sitz- 20 und/oder Rückenelement 10 können dadurch auch ohne mechanischer Verbindung von Sitz- 20 und Rückenelement 10 durch im jeweiligen Element verbundene Kammern durchgeführt werden. Der Benutzer 100 aktiviert beliebige Stellelemente des Beinelements 30 zur Änderung der Lage der Oberschenkel 105 oder zur Abstützung der Fersen. Der Benutzer 100 bewirkt durch dessen Eigengewicht eine Umverteilung von Fluiden, solange sich keine wesentlichen Auf- und/oder Sitzdruckunterschiede im Bereich des Beckens einstellen, beziehungsweise bei Anwendung in einer geneigten Lage des Benutzers und dessen ausgestreckter Beine solange, bis durch die eingestellte Druckverteilung die Fersen des Benutzers mindestens auf dem Niveau der Sitzbeinhöcker gelagert sind.

Gemäß einem Verfahren der Erfindung werden die Sitzdrücke an den Sitzbeinhöckern 102 des Benutzers 100 durch einen ersten und zweiten Drucksensor 112 erfasst und durch eine Rechnereinheit 40 ausgewertet. Die Rechnereinheit 40, vorzugsweise ein Prozessor, aktiviert bei Sitzdruckunterschieden die Kammern 108, insbesondere die in den Verbindungskanälen enthaltenen Ventile, des Sitzelements 20 und gleicht das Sitzbeinhöckerniveau des Benutzers 100, durch das Ablassen des Fluides aus der mit dem höheren Innendruck versehenen Kammer 108 des Sitzelements 20, horizontal aus. Darauf anschließend wird der Steißbeinsitzdruck des Benutzers 100 durch den dritten Sensor 111 erfasst und durch die Rechnereinheit 40 ausgewertet. Unabhängig des erfassten Werts des Sitz- und/oder Auflagedrucks des Steißbeins wird das überschüssige, im vorigen Verfahrensschritt abgelassene, Fluid und gegebenenfalls zusätzliches Fluid aus Kammern der Vorrichtung mit höherem Innendruck im Bereich des Sitzelements durch das Eigengewicht des Benutzers 100 in die Kammern 117 des Becken- und Lendenwirbelsäulenmoduls 13 gepumpt, wobei die Kammern 117 das Becken 101 des Benutzers 100 wechselweise beidseitig, beziehungsweise alternierend um dessen Horizontalachse kippen, bis der Steißbeinsitzdruck im Übergangsbereich zwischen Lastfreiheit und -übernahme im Wesentlichen den Wert Null aufweist. Gegebenenfalls muss für diesen Verfahrensschritt zur Kippung des Beckens nach hinten überschüssiges Fluid abgelassen werden, um diesen neutralen Bereich zu erreichen. Anschließend zur Positionierung des Beckens in der dritten Körperebene wird der Druck des Beckenkamms 103 und des Kreuzbeins 123 durch die Sensoren 114 und 113 erfasst und durch eine Rechnereinheit 40 ausgewertet. Die Rechnereinheit aktiviert bei Auflagedruckunterschieden die Kammern 108, insbesondere die in den Verbindungskanälen enthaltenen Ventile des Sitzelements 20 und des Becken- und Lendenwirbelsäulenmoduls 13 und gleicht den Auflagedruck des Benutzers 100 durch eine Beckenrotation um die Longitudinalachse aus, wobei das überschüssige Fluid aus Kammern mit höherem Innendruck, durch das Eigengewicht des Benutzers 100, in die Kammern 110 gepumpt wird, bis die Verteilung des Auflagedrucks ausgeglichen ist.

Gemäß dem Verfahren der Erfindung wird anschließend an den Sitzbeinhöckerniveauausgleich, den Kipp- und Rotationsvorgang des Beckens 101 im Bereich des Becken- und Lendenwirbelsäulenmoduls 13 der Rückenbereich, insbesondere, Brust-, und Halswirbelsäule, des Benutzers 100 durch alternierende und/oder synchrone Stellbewegungen, insbesondere durch das kraftflüssige Aufpumpen weiterer Kammern 110, 116, 121, 119 und 122 des Rückenelements 10, sagittal und um dessen Longitudinalachse positioniert. Dabei werden die Stellbewegung im Becken- und Lendenwirbelsäulenmodul 13, im Brustwirbelsäulenmodul 12 und im Halswirbelsäulen- und Kopfmodul 11 aufeinanderfolgend durchgeführt, wobei der Bereich um die Dornfortsätze 107 des Benutzers 100 bei jedem Stellvorgang ausgespart wird, um keinen Druck auf die Dornfortsätze 107 aufzubringen. Durch diesen Vorgang ergeben sich in den bereits positionierten Stellelementen des Sitz- und/oder Rückenelements im Wesentlichen keine Sitz-und/oder Auflagedruckunterschiede beziehungsweise Körperpositionsänderungen.

Gemäß dem Verfahren zur Körperpositionierung wird anschließend an die erstmalige Körperpositionierung des Benutzers 100 zyklisch, vorzugsweise in einem Zeitintervall von Sekunden, Minuten oder Stunden erneut eine Körperpositionierung durchgeführt. Eine erneute Körperpositionierung kann auch durch eine Abweichung des Sitzdruckunterschieds der Sitzbeinhöcker oder einer Abweichung des Sitzdrucks des Steißbeins von einem vordefinierten Sitzdruckunterschiedbereich, oder ergibt sich insbesondere im Bereich segmentaler Sitzdruckänderungen von funktionell zusammenhängender Stellelemente gemäß Anspruch 3.

Gemäß dem Verfahren zur Körperpositionierung erfolgt die Körperpositionierung des Benutzers 100 in einer geneigten Lage des Rückenelements 10.

Gemäß dem Verfahren zur Körperpositionierung werden die Stellelemente, in den Figuren nicht dargestellt, an einer Stelle des Beinelements 30 bei einer geneigten Lage des Rückenelements 10 und einer geneigten Lage des Sitzelements 20 durch die Rechnereinheit 40 aktiviert, bis die Ferse des Benutzers 100 über dem Sitzbeinhöckerniveau liegt.

Vorstehend wurde eine Ausführungsvariante der Erfindung erläutert, die im Wesentlichen ohne aktive Stellelemente auskommt, da erhöhter Druck in durch das Körpergewicht stärker belasteten Kammern, durch die Rechnereinheit 40 gesteuert, zum Aufblasen anderer Kammern genutzt wird. Durch Ablassen von Luft aus der Vorrichtung 1 kann ebenfalls, durch die Rechnereinheit 40 gesteuert, die Sitzposition verändert werden. Wenn der Benutzer 100 aus dem Sitz aufsteht können sich die durch Formstabilität selbst aufblasenden Kammern wieder in einen Ausgangszustand befüllen.

Gemäß alternativen Ausführungsvarianten können Stellelemente Aktuatoren, und die Sensoren ausgewählt aus der Gruppe von mechanischen, elektrischen, pneumatischen oder hydraulischen aktiven Aktuatoren und Sensoren umfassen. Die vorliegende Erfindung ist dadurch nicht auf mit fluidgefüllten Kammersysteme beschränkt. Beispielsweise kann der Benutzer 100 durch mit der Rechnereinheit 40 aktivierte und elektrisch angetriebene Linearantriebe 108, 117, 110, 116, 119, 121 und 122 positioniert werden, wobei statt Drucksensoren 111, 112, 113, 114, 115, 124 und 125 beispielsweise Piezoelemente zur Erfassung der Körperhaltung des Benutzers 100 eingesetzt werden können. Diese elektrisch betriebene Vorrichtung 1 erlaubt eine Körperpositionierung ohne durch Kanäle und Ventile definierte Regelkreise. Eine weitere Möglichkeit zur Körperpositionierung des Benutzers 100 kann durch hydraulische Stellelementen 108, 117, 110, 116, 119, 121 und 122 wie beispielsweise einem Hydraulikzylinder in Kombination mit Durchflussdrucksensoren 111, 112, 113, 114, 115, 124 und 125 realisiert werden. Eine weitere Möglichkeit zur Körperpositionierung des Benutzers 100 kann durch eine Kombination von unterschiedlichen Stellelementen erfolgen. Beispielsweise kann das Rückenelement 10 mechanische, insbesondere mit Fluidgefüllte Kammern 110, 116, 117, 119, 121 und 122, aufweisen, und das Sitzelement elektrische Stellelemente 108 wie beispielsweise Linearantriebe umfassen. Jegliche weitere Kombination von Stellelementen sind in dieser Erfindung miteinbezogen.

Gemäß alternativen Ausführungsvarianten können alle als mechanisch angeführten Verbindungen der Vorrichtung 1 auch elektrisch, kabelgebunden oder kabellos, mittels beispielsweise Bluetooth oder WLAN ausgeführt sein und sind nicht auf das oben ausgeführte Beispiel beschränkt.

## Patentansprüche

1. Vorrichtung (1) zur Körperpositionierung eines Benutzers (100), wobei die Vorrichtung in einen Sitz oder eine Liege integrierbar oder als Auflage verwendbar ist, umfassend:
ein Sitzelement (20), ein ein Becken- und Lendenwirbelsäulenmodul (13) aufweisendes Rückenelement (10) und eine Rechnereinheit (40), wobei das Rückenelement (10) mit dem Sitzelement (20) verbunden ist, wobei das Becken- und Lendenwirbelsäulenmodul (13) zumindest ein Stellelement (117) und zumindest einen Sensor (113) umfasst, und das Sitzelement (20) zumindest ein Stellelement (108) und zumindest drei Sensoren (111, 112) umfasst, wobei die Sensoren (111, 112, 113) mit der Rechnereinheit (40) verbunden und dazu ausgebildet sind, Sitz- und Auflagedrücke des Benutzers (100) im Sitzelement (20) und im Becken- und Lendenwirbelsäulenmodul (13) zu erfassen, wobei die Rechnereinheit (40) mit den Stellelementen (108, 117) verbunden und dazu ausgebildet ist, die Sitz- und Auflagedrücke auszuwerten und die Stellelemente (108, 117) zu aktivieren, wobei ein erster und ein zweiter Sensor (112) und ein dritter Sensor (111) dazu ausgebildet sind den Sitzdruck des ersten und zweiten Sitzbeinhöckers (102) und den Sitzdruck des Steißbeins (104) bei im Wesentlichen aufrechter Sitzposition des Benutzers (100) zu erfassen, wobei der erste und der zweite Sitzbeinhöcker (102) ein Sitzbeinhöckerniveau definieren, **dadurch gekennzeichnet, dass** das Stellelement (108) des Sitzelements (20) dazu ausgebildet ist, bei Sitz- und/oder Auflagedruckunterschieden das Sitzbeinhöckerniveau horizontal um die Sagittalachse des Benutzers (100) auszugleichen und worauf das Stellelement (117) des Becken- und Lendenwirbelsäulenmoduls (13) dazu ausgebildet ist, das Becken (101) des Benutzers (100) um dessen Horizontalachse zu kippen, bis der Sitz-und/oder Auflagedruck des Steißbeins (104) im Wesentlichen den Wert Null aufweist.

2. Vorrichtung (1) nach Anspruch 1, **dadurch gekennzeichnet, dass** im Bereich des Kreuzbeins (123) und des Steißbeins (104) des Benutzers (100) bei dessen Überführung von einer im Wesentlichen aufrechten Sitzposition in eine um die Horizontalachse des Benutzers (100) geneigte Position, Sitz- und/oder Auflagedrücke in Abhängigkeit von der Neigung dieser Position auftreten, wobei in liegender Körperposition im Bereich des Kreuzbeins (123) im Wesentlichen maximale Sitz- und/oder Auflagedrücke auftreten.

3. Vorrichtung (1) nach Anspruch 1, **dadurch gekennzeichnet, dass** das Rückenelement (10) ein Brustwirbelsäulenmodul (12) und ein Halswirbelsäulen- und Kopfmodul (11) aufweist, wobei das Brustwirbelsäulenmodul (12) und das Halswirbelsäulen- und Kopfmodul (11) miteinander und/oder einzeln mit dem Becken- und Lendenwirbelsäulenmodul (13) und/oder einzeln mit dem Sitzelement (20) verbunden sind.

4. Vorrichtung (1) nach einem der vorangehenden Ansprüche, **dadurch gekennzeichnet, dass** das Rückenelement (10) weitere Stellelemente (116, 121, 119, 122, 110) umfasst, die dazu ausgebildet sind, durch alternierende und/oder synchrone Stellbewegungen, insbesondere im Bereich der Wirbelsäule (106), den Benutzer (100) sagittal und um dessen Longitudinalachse zu positionieren, wobei die Rechnereinheit (40) dazu ausgebildet ist, die Stellbewegungen im Becken- und Lendenwirbelsäulenmodul (13), im Brustwirbelsäulenmodul (12) und im Halswirbelsäulen- und Kopfmodul (11) aufeinanderfolgend durchzuführen, wobei sich in den bereits positionierten Stellelementen des Sitz- und/oder Rückenelements im Wesentlichen keine Sitz- und/oder Auflagedruckunterschiede beziehungsweise Körperpositionsänderungen ergeben.

5. Vorrichtung (1) nach Anspruch 4, **dadurch gekennzeichnet, dass** die Stellelemente (117, 116, 119, 121, 122) bei deren Aktivierung die Dornfortsätze (107) des Benutzers (100) aussparen.

6. Vorrichtung (1) nach einem der vorangehenden Ansprüche, **dadurch gekennzeichnet, dass** die Vorrichtung (1) ein Beinelement (30) aufweist, wobei das Beinelement (30) mit dem Sitzelement (20) verbunden ist und weitere Stellelemente und Sensoren umfasst.

7. Vorrichtung (1) nach einem der vorangehenden Ansprüche, **dadurch gekennzeichnet, dass** die Stellelemente (108, 117, 110, 116, 121, 119, 122) Aktuatoren ausgewählt aus der Gruppe von mechanischen, elektrischen, pneumatischen oder hydraulischen Aktuatoren umfassen.

8. Vorrichtung (1) nach einem der vorangehenden Ansprüche, **dadurch gekennzeichnet, dass** die Sensoren (111, 112, 113, 114, 115, 124, 125) ausgewählt aus der Gruppe von mechanischen, elektrischen, pneumatischen oder hydraulischen Sensoren umfassen.

9. Verfahren zum Betrieb einer Vorrichtung (1) nach den Ansprüchen 1 bis 8, wobei das Verfahren die folgenden Schritte umfasst:
a) das Erfassen des Sitz- und/oder Auflagedrucks der Sitzbeinhöcker (102) des Benutzers (100) durch den ersten und zweiten Sensor (112);
b) das Auswerten der Sitz- und/oder Auflagedrücke und, bei Sitz- und/oder Auflagedruckunterschieden, das Aktivieren des Stellelements (108) des Sitzelements (20) durch die Rechnereinheit (40);
c) das horizontale Ausgleichen des Sitzbeinhöckerniveaus des Benutzers (100) um dessen Sagittalachse;
d) das Erfassen des Sitzdruckes des Steißbeins (104) des Benutzers (100) durch den dritten Sensor (111) des Sitzelements (20);
e) das Auswerten des Sitz- und/oder Auflagedrucks des Steißbeins (104) des Benutzers durch die Rechnereinheit (40);
f) das Aktivieren des Stellelements (117) des Becken- und Lendenwirbelsäulenmoduls (13) durch die Rechnereinheit (40) zur Kippung des Beckens (101) des Benutzers (100) um dessen Horizontalachse in eine positive und/oder negative sagittale Richtung;
g) das Beenden der Stellbewegung der Stellelemente (117) durch die Rechnereinheit (40), sobald der Sitz- und/oder Auflagedruck des Steißbeins (104) während des Kippens im Wesentlichen den Wert Null aufweist.

10. Verfahren gemäß Anspruch 9, wobei das Verfahren nach dem Sitzbeinhöckerniveauausgleich und dem Kippvorgang des Beckens (101) des Benutzers (100) die folgenden Schritte beinhaltet:
a) das Positionieren und das sagittale Abstützen des Benutzers (100) im Brustwirbelsäulenbereich durch das Aktivieren der Stellelemente (119,121) des Brustwirbelsäulenmoduls (12) durch die Rechnereinheit (40), wobei die Stellbewegungen den Bereich der Dornfortsätze (107) aussparen;
b) das Erfassen von Sitz- und Auflagedruckunterschieden durch die Sensoren (111, 112, 114, 113) des Sitz- (20) und Rückenelements (10);
c) das Auswerten der Sitz- und Auflagedrücke durch die Rechnereinheit (40);
d) das Beenden der Stellbewegung des Stellelements (119) des Brustwirbelsäulenmoduls (12) durch die Rechnereinheit (40) sobald ein wesentlicher Sitz- und/oder Auflagedruckunterschied in den Stellelementen des Sitzelements (20) und/oder des Becken- und Lendenwirbelsäulenmoduls (13) erfasst wird;
e) das anschließende Positionieren und das sagittale Abstützen des Benutzers (100) in dessen Halswirbelsäulen- und Kopfbereich durch das Aktivieren der Stellelemente (122) des Halswirbelsäulen- und Kopfmoduls (11) durch die Rechnereinheit (40);
f) das Beenden der Stellbewegung der Stellelemente (122, 115) durch die Rechnereinheit (40) sobald ein Sitz- und/oder Auflagedruckunterschied in den Stellelementen (116, 121) des Brustwirbelsäulenmoduls (12) erfasst wird.

11. Verfahren gemäß dem Anspruch 9 und 10, **dadurch gekennzeichnet, dass** die Körperpositionierung des Benutzers (100) in einer geneigten Lage des Rückenelements (10) erfolgt.

12. Verfahren gemäß Anspruch 9 und 11, **dadurch gekennzeichnet, dass** die Stellelemente an einer Stelle des Beinelements (30) bei einer geneigten Lage des Rückenelements (10) und einer geneigten Lage des Sitzelements (20) durch die Rechnereinheit (40) aktiviert werden, bis die Ferse des Benutzers (100) mindestens auf dem Sitzbeinhöckerniveau liegt.

13. Verfahren gemäß einem der Ansprüche 9 bis 12, wobei das Verfahren nach der Positionierung des Benutzers (100) folgende Schritte umfasst:
a) das Nachpositionieren des Benutzers (100) in zyklischen Zeitabständen und/oder bei einem segmentalen Druckunterschied von vordefinierten Sitz- und Auflagedruckbereichen;
b) das Aktivieren von Stellelementen der Vorrichtung (1) in einer Horizontalebene des Rückenelements (10) und/oder des Sitzelements (20) und/oder des Beinelements (30) in Form von synchronen und/oder alternierenden Stellbewegungen segmental aufwärts und/oder abwärts aufeinanderfolgend oder in beliebiger Reihenfolge entlang der Longitudinalachse, wobei die synchronen Stellbewegungen sowohl in positive als auch negative sagittale Richtung erfolgen und die alternierenden Stellbewegungen in Form einer Rotation um die Longitudinalachse erfolgen, wobei die Stellbewegung einseitig in positive sagittale Richtung und auf der anderen Seite in dem gleichen Ausmaß in negative sagittale Richtung erfolgt;
c) das Aktivieren von Stellelementen des Sitzelements (20) in Form von synchronen oder alternierenden Stellbewegungen;
d) das Aktivieren von Stellelementen des Beinelements (30) in Form von synchronen und/oder alternierenden Stellbewegungen.

## Claims

1. An apparatus (1) for positioning the body of a user (100), wherein the apparatus may be integrated into a seat or a lounger or used as a cushion, comprising:
a seating element (20), a back element (10) having a pelvis and lumbar-spine module (13) (10) and a computer unit (40), wherein the back element (10) is connected to the seating element (20), wherein the pelvis and lumbar-spine module (13) comprises at least an adjusting element (117) and at least a sensor (113), and wherein the seating element (20) comprises at least an adjusting element (108) and at least three sensors (111, 112), wherein the sensors (111, 112, 113) are connected to the computer unit (40) and configured to sense seat-related and rest-related pressures of the user (100) in the seating element (20) and in the pelvis and lumbar-spine module (13), wherein the computer unit (40) is connected to the adjusting elements (108, 117) and configured to evaluate the seat-related and rest-related pressures and to activate the adjusting elements (108, 117), **whereby** a first and a second sensor (112) and a third sensor (111) are configured to sense the seat-related pressure of the first and second ischial tuberosities (102) and the seat-related pressure of the coccyx (104) in an substantially upright seating position of the user (100), wherein the first and the second ischial tuberosities (102) define an ischial-tuberosity level, **characterized in that** the adjusting element (108) of the seating element (20) is configured to compensate for the ischial-tuberosity level horizontally about the sagittal axis of the user (100) in the case of seat-related and/or rest-related pressure differences and whereupon the adjusting element (117) of the pelvis and lumbar-spine module (13) is configured to tilt the pelvis (101) of the user (100) about the horizontal axis of the same until the seat-related and/or rest-related pressure of the coccyx has a value substantially equal to zero.

2. An apparatus (1) according to claim 1, **characterized in that** in the region of the sacrum (123) and the coccyx (104) of the user (100), when transitioning from an substantially upright seating position into a position inclined about the horizontal axis of the user (100), the seat-related and/or rest-related pressures will develop as a function of the inclination of this position, wherein in the lying position in the region of the sacrum (12) there will develop substantially maximal seat-related and/or rest-related pressures.

3. An apparatus (1) according to claim 1, **characterized in that** the back element (10) has a thoracic-spine module thoracic-spine module (12) and a cervical-spine and head module (11), wherein the thoracic-spine module (12) and the cervical-spine and head module (11) are connected to one another and/or individually with the pelvis and lumbar-spine module (13) and/or individually with the seating element (20).

4. An apparatus (1) according to any of the preceding claims, **characterized in that** the back element (10) comprises further adjusting elements (116, 121, 119, 122, 110), which are configured to position the user (100) by way of alternating and/or synchronous adjusting movements, in particular in the region of the spine (196), sagittally and about the longitudinal axis of the same, wherein the computer unit (40) is configured to carry out the adjusting movements in the pelvis and lumbar-spine module (13), in the thoracic-spine module (12) and in the cervical-spine and head module (11) in succession to one another, wherein in the adjusting elements already positioned of the seating element and/or back element there will not develop substantially any seat-related and/or rest-related pressure differences or changes of the body's position, respectively.

5. An apparatus (1) according to claim 4, **characterized in that** the adjusting elements (117, 116, 119, 121, 122) spare the spinous processes (107) of the user (100) upon the activation of the same.

6. An apparatus (1) according to any of the preceding claims, **characterized in that** the apparatus (1) has a leg element (30), wherein the leg element (30) is connected to the seating element (20) and comprises further adjusting elements and sensors.

7. An apparatus (1) according to any of the preceding claims, **characterized in that** the adjusting elements (108, 117, 110, 116, 121, 119, 122) comprise actuators selected from the group consisting of mechanic, electric, pneumatic or hydraulic actuators.

8. An apparatus (1) according to any of the preceding claims, **characterized in that** the sensors (111, 112, 113, 114, 115, 124, 125) comprise sensors selected from the group consisting of mechanic, electric, pneumatic or hydraulic sensors.

9. A method for operating an apparatus (1) according to any of the claims 1 to 8, wherein the method comprises the following steps:
a) sensing the seat-related and/or rest-related pressure of the ischial tuberosities (102) of the user (100) by the first and second sensor (112);
b) evaluating the seat-related and/or rest-related pressures and, in the case of seat-related and/or rest-related pressure differences, activating the adjusting element (108) of the seating element (20) by the computer unit (40);
c) horizontally compensating for the ischial tuberosity level of the user (100) about the sagittal axis of the same;
d) sensing the seat-related pressure of the coccyx (104) of the user (100) by the third sensor (111) of the seating element (20);
e) evaluating the seat-related and/or rest-related pressure of the coccyx (104) of the user by the computer unit (40);
f) activating the adjusting element (117) of the pelvis and lumbar-spine module (13) by the computer unit (40) to tilt the pelvis (101) of the user (100) about the horizontal axis of the same into a positive and/or negative sagittal direction;
g) terminating the adjusting movement of the adjusting elements (117) by the computer unit (40) as soon as the seat-related and/or rest-related pressure of the coccyx (104) has a value substantially equal to zero during tilting.

10. A method according to claim 9, wherein the method, following the ischial-tuberosity level compensation and the tilting process of the pelvis (101) of the user (100), includes the following steps:
a) positioning and sagittally supporting the user (100) in the region of the thoracic spine by activating the adjusting elements (119,121) of the thoracic-spine module (12) by the computer unit (40), wherein the adjusting movements spare the region of the spinous processes (107);
b) sensing seat-related and rest-related pressure differences by the sensors (111, 112, 114, 113) of the seating element (20) and back element (10);
c) evaluating the seat-related and rest-related pressures by the computer unit (40);
d) terminating the adjusting movement of the adjusting element (119) of the thoracic-spine module (12) by the computer unit (40) as soon as an essential seat-related and/or rest-related pressure difference in the adjusting elements of the seating element (20) and/or of the pelvis and lumbar-spine module (13) is being sensed;
e) subsequent positioning and sagittal supporting the user (100) in the region of the cervical spine and head region of the same by activating the adjusting elements (122) of the cervical-spine and head module (11) by the computer unit (40);
f) terminating the adjusting movement of the adjusting elements (122, 115) by the computer unit (40) as soon as a seat-related and/or rest-related pressure difference in the adjusting elements (116, 121) of the thoracic-spine module (12) is being sensed.

11. A method according to claim 9 and 10, **characterized in that** the body positioning of the user (100) is realized in an inclined position of the back element (10).

12. A method according to claim 9 and 11, **characterized in that** the adjusting elements are activated at a location of the leg element (30) in an inclined position of the back element (10) and an inclined position of the seating element (20) by the computer unit (40) until the heel of the user (100) rest at least at the ischial-tuberosity level.

13. A method according to any of the claims 9 to 12, wherein the method, following the positioning of the user (100), comprises the following steps:
a) post-positioning the user (100) in cyclic time intervals and/or at a segmental pressure difference of pre-defined seat-related and rest-related pressure ranges;
b) activating adjusting elements of the apparatus (1) in a horizontal plane of the back element (10) and/or of the seating element (20) and/or of the leg element (30) in the form of synchronous and/or alternating adjusting movements segmentally upwards and/or downwards in succession to one another or in any order along the longitudinal axis, wherein the synchronous adjusting movements are realized in a positive as well as negative sagittal direction and the alternating adjusting movements are realized in the form of a rotation about the longitudinal axis, wherein the adjusting movement is realized unilaterally in a positive sagittal direction and on the other side for the same amount in a negative sagittal direction;
c) activating adjusting elements of the seating element (20) in the form of synchronous or alternating adjusting movements;
d) activating adjusting elements of the leg element (30) in the form of synchronous and/or alternating adjusting movements.

## Revendications

1. Dispositif (1) de positionnement du corps d'un utilisateur (100), lequel dispositif peut être intégré dans un siège ou une couchette ou peut être utilisé comme surface d'appui, comprenant
un élément de siège (20), un élément de dossier (10) présentant un module de bassin et de colonne vertébrale lombaire (13) et une unité de calcul (40), dans lequel l'élément de dossier (10) est raccordé à l'unité de siège (20), dans lequel le module de bassin et de colonne vertébrale lombaire (13) comprend au moins un élément de réglage (117) et au moins un capteur (113) et l'élément de siège (20) comprend au moins un élément de réglage (108) et au moins trois capteurs (111, 112), dans lequel les capteurs (111, 112, 113) sont reliés à l'unité de calcul (40) et sont conçus pour détecter les pressions de siège et de surface d'appui de l'utilisateur (100) dans l'élément de siège (20) et le module de bassin et de colonne vertébrale lombaire (13), dans lequel l'unité de calcul (40) est reliée avec les éléments de réglage (108, 117) et est conçue pour évaluer les pressions de siège et de surface d'appui et pour activer les éléments de réglage (108, 117), et dans lequel un premier et un deuxième capteur (112) et un troisième capteur (111) sont conçus pour enregistrer la pression de siège de la première et de la seconde tubérosité ischiatique (102) et la pression de siège du coccyx (104) lorsque l'utilisateur (100) est assis sensiblement droit, la première et la deuxième tubérosité ischiatique (102) définissant un niveau des tubérosités ischiatiques, **caractérisé en ce que** l'élément de réglage (108) de l'élément de siège (20) est conçu pour compenser le niveau des tubérosités ischiatiques horizontalement autour de l'axe sagittal de l'utilisateur (100) en cas de différences de pression de siège et de surface d'appui, et que l'élément de réglage (117) du module de bassin et de colonne vertébrale lombaire (13) est conçu pour faire basculer le bassin (101) de l'utilisateur autour de son axe horizontal jusqu'à ce que la pression de siège et/ou de surface d'appui du coccyx (104) présente sensiblement la valeur zéro.

2. Dispositif (1) selon la revendication 1, **caractérisé en ce que,** dans la région du sacrum (123) et du coccyx (104) de l'utilisateur, lorsque celui-ci passe d'une position assise sensiblement droite à une position inclinée autour de son axe horizontal, des pressions de siège et/ou de surface d'appui apparaissent en fonction de l'inclinaison de cette position, des pressions de siège et/ou de surface d'appui sensiblement maximales apparaissant dans la région du sacrum (123) en position corporelle couchée.

3. Dispositif (1) selon la revendication 1, **caractérisé en ce que** l'élément de dossier (10) comporte un module de colonne vertébrale thoracique (12) et un module de colonne vertébrale cervicale et de tête (11), lesquels module de colonne vertébrale thoracique (12) et module de colonne vertébrale cervicale et de tête (11) sont reliés entre eux et/ou individuellement avec le module de bassin et de colonne vertébrale lombaire (13) et/ou individuellement avec l'élément de siège (20).

4. Dispositif (1) selon une des revendications précédentes, **caractérisé en ce que** l'élément de dossier (10) comprend d'autres éléments de réglage (116, 121, 119, 122, 110) qui sont conçus pour positionner l'utilisateur, par des mouvements de réglage alternés et/ou synchrones, en particulier dans la région de la colonne vertébrale (106), dans le plan sagittal et autour de son axe longitudinal, l'unité de calcul (40) étant conçue pour exécuter successivement les mouvements de réglage dans le module de bassin et de colonne vertébrale lombaire (13), dans le module de colonne vertébrale thoracique (12) et dans le module de colonne vertébrale cervicale et de tête (11), pratiquement aucune différence de pression de siège et/ou de surface d'appui ni aucun changement de position corporelle n'apparaissant dans les éléments de réglage déjà positionnés de l'élément de siège et/ou de dossier.

5. Dispositif (1) selon la revendication 4, **caractérisé en ce que** les éléments de réglage (117, 116, 119, 121, 122) épargnent les apophyses épineuses (107) de l'utilisateur (100) lors de leur activation.

6. Dispositif (1) selon une des revendications précédentes, **caractérisé en ce que** ce dispositif (1) comporte un élément de jambes (30), lequel élément de jambes (30) est relié avec l'élément de siège (20) et comprend d'autres éléments de réglage et capteurs.

7. Dispositif (1) selon une des revendications précédentes, **caractérisé en ce que** les éléments de réglage (108, 117, 110, 116, 121, 119, 122) comprennent des actionneurs sélectionnés parmi le groupe des actionneurs mécaniques, électriques, pneumatiques ou hydrauliques.

8. Dispositif (1) selon une des revendications précédentes, **caractérisé en ce que** les capteurs (111, 112, 113, 114, 115, 124, 125) comprennent des capteurs sélectionnés parmi le groupe des capteurs mécaniques, électriques, pneumatiques ou hydrauliques.

9. Procédé pour l'exploitation d'un dispositif (1) selon les revendications! à 8, lequel procédé comprend les étapes suivantes :
a) détection de la pression de siège et/ou de surface d'appui des tubérosités ischiatiques (102) de l'utilisateur (100) par les premier et le deuxième capteur (112),
b) évaluation des pressions de siège et/ou de surface d'appui et, en cas de différences des pressions de siège et/ou de surface d'appui, activation de l'élément de réglage (108) de l'élément de siège (20) par l'unité de calcul (40),
c) Compensation horizontale du niveau des tubérosités ischiatiques de l'utilisateur (100) autour de son axe sagittal,
d) détection de la pression de siège du coccyx (104) de l'utilisateur (100) par le troisième capteur (111) de l'élément de siège (20),
e) évaluation de la pression de siège et/ou de surface d'appui du coccyx (104) de l'utilisateur par l'unité de calcul (40),
f) activation de l'élément de réglage (117) du module de bassin et de colonne vertébrale lombaire (13) par l'unité de calcul (40) pour faire basculer le bassin (101) de l'utilisateur (100) autour de son axe horizontal dans une direction sagittale positive et/ou négative et
g) arrêt du mouvement de réglage des éléments de réglage (117) par l'unité de calcul (40) dès que la pression de siège et/ou de surface d'appui du coccyx (104) atteint sensiblement la valeur zéro au cours du basculement.

10. Procédé selon la revendication 9, lequel procédé comprend les étapes suivantes après la compensation du niveau des tubérosités ischiatiques et le processus de basculement du bassin (101) de l'utilisateur (100) :
a) positionnement et soutien sagittal de l'utilisateur (100) dans la région de la colonne vertébrale thoracique par l'activation des éléments de réglage (119, 121) du module de colonne vertébrale thoracique (12) par l'unité de calcul (40), les mouvements de réglage épargnant la région des apophyses épineuses (107),
b) détection des différences de pression de siège et de surface d'appui par les capteurs (111, 112, 114, 113) des éléments de siège (20) et de dossier (10),
c) évaluation des pressions de siège et de surface d'appui par l'unité de calcul (40),
d) arrêt du mouvement de réglage de l'élément de réglage (119) du module de colonne vertébrale thoracique (12) par l'unité de calcul (40) dès qu'une différence sensible de pression de siège et/ou de surface d'appui est détectée dans les éléments de réglage de l'élément de siège (20) et/ou du module de bassin et de colonne vertébrale lombaire (13),
e) positionnement subséquent et soutien sagittal de l'utilisateur (100) dans la région de sa colonne vertébrale cervicale et de sa tête par l'activation des éléments de réglage (122) du module de colonne vertébrale cervicale et de tête (11) par l'unité de calcul (40) et
f) arrêt du mouvement de réglage des éléments de réglage (122, 115) par l'unité de calcul (40) dès qu'une différence de pression de siège et/ou de surface d'appui est détectée dans les éléments (116, 121) du module de colonne vertébrale thoracique (12).

11. Procédé selon les revendications 9 et 10, **caractérisé en ce que** le positionnement du corps de l'utilisateur (100) se fait avec l'élément de dossier (10) en position inclinée.

12. Procédé selon les revendications 9 et 11, **caractérisé en ce que** les éléments de réglage sont activés par l'unité de calcul (40) à un endroit de l'élément de jambes (30) avec l'élément de dossier (10) en position inclinée et avec l'élément de siège (20) en position inclinée, jusqu'à ce que le talon de l'utilisateur (100) se trouve au moins au niveau des tubérosités ischiatiques.

13. Procédé selon une des revendications 9 à 12, lequel procédé comprend les étapes suivantes après le positionnement de l'utilisateur :
a) repositionnement de l'utilisateur (100) à intervalles réguliers et/ou en cas de différence de pression segmentaire de régions de pression de siège et de surface d'appui prédéfinies,
b) activation d'éléments de réglage du dispositif (1) dans un plan horizontal de l'élément de dossier (10) et/ou de l'élément de siège (20) et/ou de l'élément de jambes (30) sous la forme de mouvements de réglage synchrones et/ou alternés, de façon segmentaire en amont et/ou en aval les uns des autres ou dans un ordre quelconque le long de l'axe longitudinal, les mouvements de réglage synchrones se produisant aussi bien dans une direction sagittale positive que négative et les mouvements de réglage alternés se produisant sous la forme d'une rotation autour de l'axe longitudinal, le mouvement de réglage se produisant d'un côté dans une direction sagittale positive et de l'autre côté avec la même ampleur dans une direction sagittale négative,
c) activation d'éléments de réglage de l'élément de siège (20) sous la forme de mouvements de réglage synchrones ou alternés et
d) activation d'éléments de réglage de l'élément de jambes (320) sous la forme de mouvements de réglage synchrones et/ou alternés.
